# EUROPEAN PATENT SPECIFICATION

(11) **EP 3 456 530 B1**
(45) Date of publication and mention of the grant of the patent: **12.08.2020**
(21) Application number: 18194366.3
(22) Date of filing: 13.09.2018
(51) Int. Cl.: B32B 5/02, B32B 5/26, B32B 7/12, D06N 3/00, D06M 17/10, D06N 3/14, B32B 38/08

(54) **MULTILAYER COMPOSITE MATERIAL AND RELATED PRODUCTION METHOD**
MEHRSCHICHTIGES VERBUNDMATERIAL UND VERFAHREN ZUR HERSTELLUNG DESSELBEN
MATÉRIAU COMPOSITE MULTICOUCHE ET MÉTHODE DE PRODUCTION ASSOCIÉE

(30) Priority: 13.09.2017 IT 201700102380
(43) Date of publication of application: 20.03.2019
(73) Proprietor: Lorenzi S.r.l., 35010 Vigonza (PD) (IT)
(72) Inventor: LORENZI, Lorenzo, 30035 Venezia (IT)
(74) Representative: Morabito, Sara

(56) References cited:
- EP-A2- 1 536 056
- EP-A2- 1 760 189
- WO-A2-2012/039763
- DATABASE WPI Week 201683 Thomson Scientific, London, GB; AN 2016-68726J XP002788094, & CN 106 049 073 A (ZHEJIANG FANSHENG MICROFIBER PROD CO LTD) 26 October 2016 (2016-10-26)

## Description

The present invention concerns multilayer materials and in particular concerns a multilayer material particularly intended for the manufacture of reinforcing elements, accessories, clothing and footwear.

The invention also concerns a method for producing a multilayer material.

The multilayer material and the method for producing a multilayer material of the present invention are defined in the appended claims.

Multilayer materials are known that are obtained by coupling two or more layers of identical or even different materials.

An example of a multilayer material are the sheets intended to wrap food in retail. These sheets consist of a sheet of paper on one side to which a sheet of polyethylene is coupled and joined. Moreover, coupled and/or layered fabrics are known, obtained by joining two different fabrics in order to utilise the individual characteristics of each fabric.

Multilayer materials are known which comprise a layer made of polyester microfibre, in particular polyethylene terephthalate, and a PET support layer.

One problem with multilayer materials in which the different layers are made of different materials is achieving proper adhesion between the adjacent layers.

This problem is particularly evident for multilayer materials in which the layers are made of non-woven fabrics.

Usually, the microfibre layer is combined with the support layer using suitable adhesives at the end of the production process and in particular at the end of dyeing the multilayer material.

However, in this case it is not possible to achieve homogeneous colouring of the multilayer material. Alternatively, the microfibre layer and the support layer can be combined by interweaving the fibres thereof using a needling process.

However, this technique cannot be used with all materials, due to the intrinsic limitations of the needling technique itself. Moreover, some materials, such as those which have a high density, are not suitable for being subjected to a needling process.

To overcome this drawback, EP1760189 has proposed a method for producing multilayer synthetic leathers that provides for producing a polyethylene terephthalate microfibre layer, cutting this layer longitudinally to obtain two laminates and coupling the two microfibre PET laminates to a reinforcing PET textile layer using a thermoplastic adhesive.

Subsequently, the intermediate multilayer obtained is immersed in a polyurethane resin so as to completely impregnate it. In this way, the polyurethane resin wraps around the multilayer material to be produced. Subsequently, the multilayer material impregnated with polyurethane resin is coagulated.

In this way, a soft and smooth multilayer material is obtained.

A disadvantage of the method described above is that it is only suitable for use for certain types of multilayer materials. This method is particularly suitable for use in obtaining multilayer materials in which the microfibre layer and the reinforcing layer are polyester-based, in particular polyethylene terephthalate.

Conversely, this method does not make it possible to obtain satisfactory results with multilayer materials in which the microfibre layer and the reinforcing layer are made of different materials and have different mechanical characteristics.

This method is also not suitable for use with all types of materials.

During the coagulation phase, temperatures of about 150°C are usually attained, and therefore this method cannot be used to produce multilayer materials which also have a layer made of a material that has a melting or softening temperature lower than the coagulation temperature or which are subject to changes in their mechanical properties at this temperature.

Moreover, this method is not suitable for use in producing multilayer materials that have high mechanical strength, in particular tensile strength.

There is thus still the need for a multilayer material in which the layers are firmly coupled to each other and which has good mechanical strength.

The object of the present invention is to provide a multilayer material specifically for the manufacture of reinforcing elements, accessories, clothing and footwear.

An object of the invention is to provide a multilayer material that allows the limits highlighted with reference to the cited prior art to be overcome.

An object of the invention is to provide a multilayer material that has high mechanical strength characteristics.

Another object of the invention is to provide a multilayer material having high tensile strength characteristics.

Another object of the invention is to provide a multilayer material having high flexibility and compliance characteristics.

Another object of the invention is to provide a multilayer material that, when coupled to leather or other fabrics, generates a product that is wrinkle-free and does not produce angled surfaces when flexed.

Another object of the invention is to provide a multilayer material that easily adapts to the shape of the different surfaces upon which it is applied.

Another object of the invention is to provide a multilayer material that can easily be adhered to leather and other fabrics.

Another object of the invention is to provide a multilayer material that has great softness.

Another object is to provide a raw-cut multilayer material that is stable and not subject to fraying. These and other objects are achieved by the multilayer material produced according to claim 1.

An object of the invention is to provide a method for producing a multilayer material, which allows the limits highlighted with reference to the cited prior art to be overcome.

In particular, it is an object of the invention to provide a method for producing a multilayer material which allows good adhesion to be achieved between the various layers of the material itself and which at the same time limits the consumption of polyurethane binding resin for coupling the various layers of the same material.

Another object is to provide a method for making a tensile stress-resistant multilayer material.

Another object is to provide a method that makes it possible to produce a raw-cut multilayer material that is stable and fundamentally not subject to fraying.

This object is achieved by a method according to claim 8.

In a first aspect of the invention, a method is provided for producing a multilayer material comprising the following steps:
- forming at least one microfibre layer of polymeric material,
- forming a support layer containing 25-100% by weight of ultra-high-molecular-weight polyethylene (UHMWPE),
- impregnating the at least one microfibre layer with a polyurethane resin and subjecting the impregnated microfibre layer to coagulation to obtain a coagulated microfibre layer,
- joining the coagulated microfibre layer and the support layer using polyurethane adhesive to obtain a multilayer material.

In this way, a multilayer material is obtained that has both good flexibility and high mechanical strength.

Owing to the method stable adhesion between the microfibre layer and the support layer is obtained.

The coagulated microfibre layer and the support layer are joined by means of lamination using a polyurethane adhesive.

Advantageously, the microfibre layer is made of non-woven polyamide microfibre fabric that has an orthogonal arrangement and is coagulated with polyurethane resin.

In a version of the method, a second coagulated microfibre layer is formed and the second coagulated microfibre layer is joined to the support layer so that the latter is interposed between the first and second coagulated microfibre layers.

In an aspect of the invention, a multilayer material is provided comprising at least one first coagulated microfibre layer and at least one support layer that is made of high-resistance synthetic fabric and joined to the first coagulated microfibre layer, wherein the support layer is joined to the at least one first coagulated microfibre layer by means of a polyurethane adhesive, the support layer comprising between 25% and 100% by weight of ultra-high-molecular-weight polyethylene (UHMWPE).

The multilayer material of the invention is simultaneously flexible and resistant, in particular to tensile stress.

The multilayer material of the invention is particularly resistant to fraying.

In one version the multilayer material comprises between 25% and 50% by weight of ultra-high-molecular-weight polyethylene (UHMWPE), preferably between 25% and 40% by weight of ultra-high-molecular-weight polyethylene (UHMWPE).

Advantageously, ultra-high-molecular-weight polyethylene and polyamide fibres are used that have a denier between 100 and 250 denier, more preferably between 120 and 200 denier, even more preferably about 125 denier.

In this way a multilayer material is obtained which is simultaneously very resistant to tensile stress and has a stable size that is practically never subject to fraying.

In a preferred embodiment, the support layer is made with ultra-high-molecular-weight polyethylene and polyamide fibres.

In a preferred embodiment, the support layer is made with 25-100% by weight of ultra-high-molecular-weight polyethylene fibres and 0-75% of polyamide, the support layer is preferably made with 25-50% of ultra-high-molecular-weight polyethylene and 50-75% by weight of polyamide, the support layer is more preferably made with 25-40% of ultra-high-molecular-weight polyethylene and 60-75% by weight of polyamide.

In a particularly preferred embodiment, the support layer is made of ultra-high-molecular-weight polyethylene fibres arranged in an orthogonal arrangement, that is a weft/warp arrangement.

This structure allows the resistance of the multilayer material of the invention to be maximised.

In one version, the material of the invention further comprises a second coagulated microfibre layer joined to the support layer using a polyurethane adhesive, the second coagulated microfibre layer being positioned so that the support layer is interposed between the first and the second coagulated microfibre layers.

Advantageously, the microfibre layer or layers consist of non-woven, or orthogonal, coagulated polyamide microfibre fabric.

In particular, the microfibre layers consist of non-woven polyamide microfibre fabric coagulated with polyurethane.

In a preferred embodiment, each coagulated microfibre layer comprises about 45-55% by weight of polyamide and about 45-55% by weight of polyurethane.

Preferably, each coagulated microfibre layer comprises about 50% by weight of polyamide and about 50% by weight of polyurethane.

In other versions a polyester microfibre coagulated with polyurethane can also be used.

It is preferable that the composition of each coagulated microfibre layer consists of about half polyamide and about half polyurethane.

Each coagulated microfibre layer has a thickness of between a few tenths of a millimetre and a few millimetres.

It is preferable that the thickness of each coagulated microfibre layer is between 0.3 mm and 2.1 mm, in a particularly preferred version the thickness of each coagulated microfibre layer is about 0.7 mm.

Each microfibre layer is made in a manner known in the field, for example as described in EP1760189, and subsequently coagulated with a polyurethane resin.

In one version, the support layer is made of ultra-high-molecular-weight polyethylene fibre fabric that has high resistance and an orthogonal construction.

The support layer has a thickness of approximately a few tenths of a millimetre.

It is preferable that the thickness of the support layer is between 0.1 mm and 0.8 mm, in a preferred version it has a thickness of 0.15 mm.

The coagulated microfibre layers are coupled and joined to the support layer by polyurethane joining, using polyurethane adhesive between the coagulated microfibre layers and the support layer.

The microfibre layer or layers give the multilayer material better adaptability to different surfaces. The microfibre layer or layers allow the multilayer material to be easily adhered to leathers and other fabrics.

The microfibre layer or layers allow the object coated with the material of the invention to be almost wrinkle-free and such that, when flexed, it does not produce angled surfaces.

The support layer constitutes a reinforcing layer, which gives high mechanical strength, in particular tensile strength, to the multilayer material of the invention.

The multilayer material of the invention has considerable advantages.

The multilayer material of the invention has high flexibility and softness characteristics due to the thickness of the microfibre layers and the support layer.

The multilayer material of the invention has high adhesion characteristics to different materials, such as leather and other fabrics.

The multilayer material of the invention is particularly suitable for the production of clothing, parts of clothing, footwear, parts of footwear, reinforcements for clothing and/or footwear, bags and suitcases, parts of bags and suitcases, belts and motorcycle clothing.

In the attached drawing, an embodiment of the multilayer material of the invention is shown using a non-limiting example.

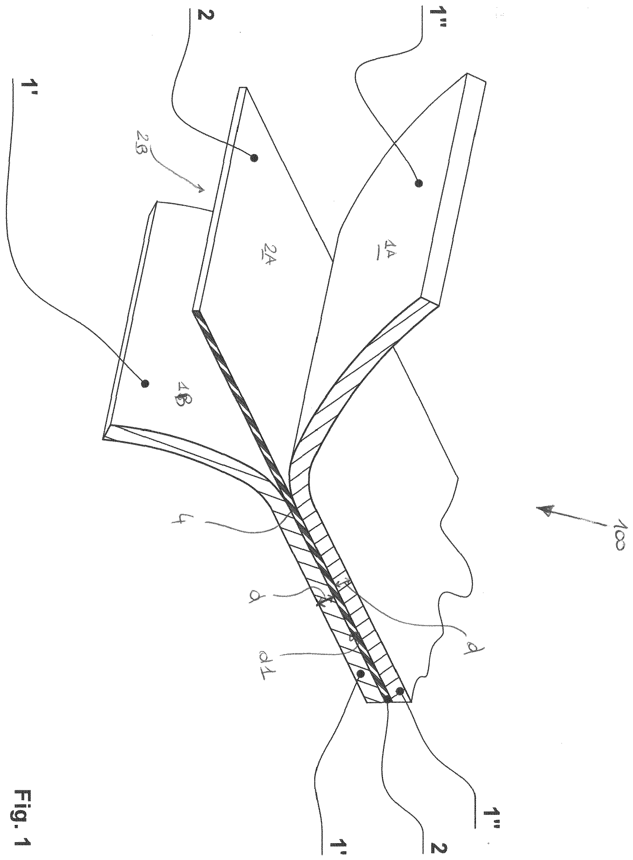

Figure 1 is a broken schematic view of a multilayer material 100 made according to the invention. The multilayer material 100 comprises a first and a second coagulated microfibre layer 1', 1", between which a support layer 2 is interposed.

The support layer 2 is joined to each coagulated microfibre layer 1', 1" using a polyurethane adhesive applied between the mutually facing sides 1A, 2A and 1B, 2B of the support layer 2 and of each coagulated microfibre layer 1', 1".

The first and the second coagulated microfibre layers 1', 1" are made according to one of the known methods for the production of microfibres, for example as described in EP1760189, and subsequently coagulated with polyurethane resin so as to obtain coagulated microfibre layers 1', 1". In the version shown, the first and the second coagulated microfibre layers 1', 1" are made of microfibres from the same polymer; however in other versions they can be made with microfibres that are different from one other.

Each coagulated microfibre layer 1', 1" is made of non-woven microfibre polyamide fabric coagulated with polyurethane resin.

Each coagulated microfibre layer 1', 1" comprises about 45-55% by weight of polyamide and about 45-55% by weight of polyurethane, preferably about 50% by weight of polyamide and about 50% by weight of polyurethane.

In other versions not shown the first and/or the second coagulated microfibre layers are made of polyester microfibre coagulated with polyurethane.

Each coagulated microfibre layer 1', 1" has a thickness "d" of about 0.7 mm; usually the thickness d of each coagulated microfibre layer 1', 1" varies between 0.3 and 2.1 mm.

In the version shown, the support layer 2 is made of 25-40% by weight of ultra-high-molecular-weight polyethylene fibres and 60-75% by weight of polyamide.

The ultra-high-molecular-weight polyethylene fibres of the support layer 2 have an orthogonal arrangement.

Therefore, the support layer 2 has edges with a so-called "raw-cut", that is the fibres of the support layer 2 reach up to the lateral edges 4 of the support layer 2 itself.

Despite the fact that this structure would be particularly suitable for promoting the extraction of the support layer 2, however, tests carried out by the applicant have shown that the multilayer material 100 of the invention is stable subject to only very limited fraying.

The support layer 2 has a further thickness d1 of about 0.15 mm; the further thickness d1 is usually between 0.1 and 0.8 mm.

In a version not shown, one of the two coagulated microfibre layers is not present and the multilayer material comprises a coagulated microfibre layer and a support layer joined with the coagulated microfibre layer using a polyurethane adhesive.

In order to produce the multilayer material of the invention, at least one microfibre, preferably microfibre of polyamide, layer is first formed, this layer is impregnated with a polyurethane resin and subjected to coagulation, a support layer containing 25-100% by weight of ultra-high-molecular-weight polyethylene fibres is formed and the coagulated microfibre layer and the support layer are joined using a polyurethane adhesive.

Advantageously the coagulated microfibre layer and the support layer are joined using lamination by means of a polyurethane adhesive.

A multilayer raw-cut material is obtained which is very resistant to tensile stress and which is practically never subject to fraying.

The invention can be defined, inter alia, by the following examples:
1. Layered composite material, characterised in that it comprises two outer microfibre layers (1', 1"), between which an inner layer (2) of high-resistance synthetic fabric is included and joined.
2. Composite material, according to example 1, characterised in that each of said outer layers (1', 1") comprises non-woven polyamide fabrics coagulated with polyurethane.
3. Composite material, according to example 2, characterised in that each of said outer layers (1', 1") comprises half polyamide and half polyurethane.
4. Composite material, according to any one of the previous examples, characterised in that each of said outer layers (1', 12) has a thickness that includes and varies between 0.3 and 2.1 mm.
5. Composite material, according to example 1, characterised in that said inner layer (2) comprises ultra-high-molecular-weight polyethylene fibres.
6. Composite material, according to example 5, characterised in that said inner layer (2) comprises between 25% and 100% of polyethylene fibres.
7. Composite material, according to either example 5 or example 6, characterised in that said fibres of said inner layer (2) are arranged in an orthogonal arrangement.
8. Composite material, according to examples 5, 6 and 7, characterised in that said inner layer (2) has a thickness of between 0.1 mm and 0.8 mm.
9. Composite material, according to any one of the previous examples, characterised in that each of said outer layers (1', 1") is coupled and joined to said inner layer (2) using polyurethane joining by means of polyurethane resin.

## Claims

1. Multilayer material (100) comprising at least one first layer (1', 1") made of coagulated microfibre and at least one support layer (2) that is made of high-resistance synthetic fabric and coupled to said at least one first coagulated microfibre layer (1', 1"), wherein said support layer (2) is joined to said at least one first layer (1', 1") using a polyurethane adhesive, wherein the support layer (2) comprises between 25-100% by weight of ultra-high-molecular-weight polyethylene (UHMWPE).

2. Material according to the preceding claim, wherein said support layer (2) is made with 25-100% by weight of ultra-high-molecular-weight polyethylene fibres and 0-75% by weight of polyamide, the support layer (2) is preferably made with 25-50% of ultra-high-molecular-weight polyethylene and 50-75% by weight of polyamide, the support layer (2) is more preferably made with 25-40% of ultra-high-molecular-weight polyethylene and 60-75% by weight of polyamide.

3. Material according to any one of the preceding claims, wherein said support layer (2) is made with ultra-high-molecular-weight polyethylene fibres arranged in an orthogonal arrangement.

4. Material according to the preceding claim, wherein said ultra-high-molecular-weight polyethylene fibres have a denier of between 100 and 250 denier, preferably between 120 and 200 denier, even more preferably about 125 denier.

5. Material according to any one of the preceding claims and further comprising a second coagulated microfibre layer (1', 1") joined to said support layer (2) using a polyurethane adhesive, wherein said second coagulated microfibre layer (1', 1") is positioned such that said support layer (2) is interposed between said first and said second coagulated microfibre layer (1', 1").

6. Material according to any one of the preceding claims, wherein said first and/or said second coagulated microfibre layers (1', 1") consist of non-woven polyamide microfibre fabric, preferably non-woven polyamide microfibre fabric coagulated with polyurethane.

7. Material according to any one of the preceding claims, wherein said first and/or said second coagulated microfibre layer (1', 1") comprises about 45-55% by weight of polyamide and about 45-55% by weight of polyurethane, preferably about 50% by weight of polyamide and about 50% by weight of polyurethane.

8. Material according to any one of the preceding claims, wherein said first and/or said second coagulated microfibre layer (1', 1") has a thickness of between 0.3 mm and 2.1 mm, preferably 0.7 mm.

9. Material according to any one of the preceding claims, wherein said support layer (2) has a thickness of between 0.1 mm and 0.8 mm, preferably 0.15 mm.

10. Method for producing a multilayer material (100), comprising the following phases:
- forming at least one microfibre layer of polymeric material,
- forming a support layer (2) containing 25-100% by weight of ultra-high-molecular-weight polyethylene,
- impregnating said at least one microfibre layer with a polyurethane resin and subjecting said at least one impregnated microfibre layer to coagulation to obtain a coagulated microfibre layer (1', 1"),
- joining said coagulated microfibre layer (1', 1") and said support layer (2) using polyurethane adhesive to obtain a multilayer material (100).

11. Method according to the preceding claim, wherein said coagulated microfibre layer (1', 1") and said support layer (2) are joined using polyurethane adhesive by means of lamination to obtain said multilayer material (100).

12. Method according to either claim 10 or claim 11, and further comprising forming a second coagulated microfibre layer (1', 1") and joining said second coagulated microfibre layer (1', 1") and said support layer (2) such that the latter is interposed between said first and said second coagulated microfibre layer (1', 1").

## Patentansprüche

1. Mehrschichtmaterial (100), das zumindest eine erste Schicht (1', 1") aus koagulierter Mikrofaser und zumindest eine Trägerschicht (2) umfasst, die aus hochbeständigem Synthetik-Gewebe hergestellt ist und mit zumindest einer ersten koagulierten Mikrofaserschicht (1', 1") verbunden ist,
wobei die Trägerschicht (2) unter Verwendung eines Polyurethanklebstoffs mit der zumindest einen ersten Schicht (1', 1") verbunden ist, wobei die Trägerschicht (2) zwischen 25 - 100 Gew.-% Polyethylen mit ultrahohem Molekulargewicht (UHMWPE) umfasst.

2. Material nach dem vorhergehenden Anspruch, wobei die Trägerschicht (2) aus 25 - 100 Gew.-% Polyethylenfasern mit ultrahohem Molekulargewicht und 0 - 75 Gew.-% Polyamid hergestellt ist, die Trägerschicht (2) vorzugsweise aus 25 - 50% Polyethylen mit ultrahohem Molekulargewicht und 50 - 75 Gew.-% Polyamid hergestellt ist, die Trägerschicht (2) insbesondere aus 25 - 40% Polyethylen mit ultrahohem Molekulargewicht und 60 - 75 Gew.-% Polyamid hergestellt ist.

3. Material nach einem der vorhergehenden Ansprüche, wobei die Trägerschicht (2) aus Polyethylenfasern mit ultrahohem Molekulargewicht hergestellt ist, die in orthogonaler Anordnung angeordnet sind.

4. Material nach dem vorhergehenden Anspruch, wobei die Polyethylenfasern mit ultrahohem Molekulargewicht ein Denier zwischen 100 und 250 Denier, vorzugsweise zwischen 120 und 200 Denier, insbesondere etwa 125 Denier aufweisen.

5. Material nach einem der vorhergehenden Ansprüche, das ferner eine zweite koagulierte Mikrofaserschicht (1', 1") umfasst, die mit der Trägerschicht (2) unter Verwendung eines Polyurethanklebstoffs verbunden ist, wobei die zweite koagulierte Mikrofaserschicht (1', 1") ist so positioniert, dass die Trägerschicht (2) zwischen der ersten und der zweiten koagulierten Mikrofaserschicht (1', 1") angeordnet ist.

6. Material nach einem der vorhergehenden Ansprüche, wobei die ersten und/oder zweiten koagulierten Mikrofaserschichten (1', 1") aus Polyamid-Mikrofaser-Vliesstoff, vorzugsweise aus mit Polyurethan koaguliertem Polyamid-Mikrofaser-Vliesstoff, hergestellt sind.

7. Material nach einem der vorhergehenden Ansprüche, wobei die ersten und/oder zweiten koagulierten Mikrofaserschichten (1', 1") etwa 45 - 55 Gew.-% Polyamid und etwa 45 bis 55 Gew.-% Polyurethan, vorzugsweise etwa 50 Gew.-% Polyamid und etwa 50 Gew.-% Polyurethan, aufweisen.

8. Material nach einem der vorhergehenden Ansprüche, wobei die ersten und/oder zweiten koagulierten Mikrofaserschichten (1', 1") eine Dicke zwischen 0,3 mm und 2,1 mm, vorzugsweise 0,7 mm, aufweisen.

9. Material nach einem der vorhergehenden Ansprüche, wobei die Trägerschicht (2) eine Dicke zwischen 0,1 mm und 0,8 mm, vorzugsweise 0,15 mm, aufweist.

10. Verfahren zum Herstellen eines Mehrschichtmaterials (100), das die folgenden Phasen umfasst:
- Bilden zumindest einer Mikrofaserschicht aus Polymermaterial,
- Bilden einer Trägerschicht (2), die 25 - 100 Gew.-% Polyethylen mit ultrahohem Molekulargewicht umfasst,
- Imprägnieren der zumindest einen Mikrofaserschicht mit einem Polyurethanharz und Unterziehen der zumindest einen imprägnierten Mikrofaserschicht einer Koagulation, um eine koagulierte Mikrofaserschicht (1 ", 1") zu erhalten,
- Verbinden der koagulierten Mikrofaserschicht (1', 1") und der Trägerschicht (2) unter Verwendung eines Polyurethanklebstoffs, um ein Mehrschichtmaterial (100) zu erhalten.

11. Verfahren nach dem vorhergehenden Anspruch, wobei die koagulierte Mikrofaserschicht (1', 1") und die Trägerschicht (2) unter Verwendung eines Polyurethanklebstoffs mittels Laminierung verbunden werden, um das Mehrschichtmaterial (100) zu erhalten.

12. Verfahren nach Anspruch 10 oder Anspruch 11, und das ferner das Bilden einer zweiten koagulierten Mikrofaserschicht (1', 1") und das Verbinden der zweiten koagulierten Mikrofaserschicht (1', 1") und der Trägerschicht (2) umfasst, sodass die letztere zwischen den ersten und zweiten koagulierten Mikrofaserschichten (1', 1") angeordnet ist.

## Revendications

1. Matériau multicouche (100) comprenant au moins une première couche (1', 1") faite d'une microfibre coagulée et au moins une couche de support (2) faite d'un tissu synthétique à haute résistance et couplée à ladite au moins une première couche de microfibre coagulée (1', 1"), dans lequel ladite couche de support (2) est jointe à ladite au moins une première couche (1', 1") en utilisant un adhésif en polyuréthane, dans lequel la couche de support (2) comprend entre 25 et 100% en poids de polyéthylène de poids moléculaire ultra-élevé (UHMWPE).

2. Matériau selon la revendication précédente, dans lequel ladite couche de support (2) est faite de 25 à 100 % en poids de fibres de polyéthylène de poids moléculaire ultra-élevé et de 0 à 75 % en poids de polyamide, la couche de support (2) est de préférence faite de 25 à 50 % de polyéthylène de poids moléculaire ultra-élevé et de 50 à 75 % en poids de polyamide, la couche de support (2) est de manière davantage préférée faite de 25 à 40 % de polyéthylène de poids moléculaire ultra-élevé et de 60 à 75 % en poids de polyamide.

3. Matériau selon l'une quelconque des revendications précédentes, dans lequel ladite couche de support (2) est faite de fibres de polyéthylène de poids moléculaire ultra-élevé agencées selon un agencement orthogonal.

4. Matériau selon la revendication précédente, dans lequel lesdites fibres de polyéthylène de poids moléculaire ultra-élevé présentent un denier situé entre 100 et 250 deniers, de préférence entre 120 et 200 deniers, de manière davantage préférée d'environ 125 deniers.

5. Matériau selon l'une quelconque des revendications précédentes et comprenant en outre une seconde couche de microfibre coagulée (1', 1") jointe à ladite couche de support (2) en utilisant un adhésif en polyuréthane, dans lequel ladite seconde couche de microfibre coagulée (1', 1") est positionnée de telle sorte que ladite couche de support (2) est intercalée entre ladite première et ladite seconde couche de microfibre coagulée (1', 1").

6. Matériau selon l'une quelconque des revendications précédentes, dans lequel lesdites première et/ou seconde couches de microfibre coagulée (1', 1") sont constituées d'un tissu en microfibre de polyamide non tissé, de préférence d'un tissu en microfibre de polyamide non tissé coagulé avec un polyuréthane.

7. Matériau selon l'une quelconque des revendications précédentes, dans lequel ladite première et/ou ladite seconde couche de microfibre coagulée (1', 1") comprennent environ 45 à 55 % en poids de polyamide et environ 45 à 55 % en poids de polyuréthane, de préférence environ 50 % en poids de polyamide et environ 50 % en poids de polyuréthane.

8. Matériau selon l'une quelconque des revendications précédentes, dans lequel ladite première et/ou ladite seconde couche de microfibre coagulée (1', 1") présente une épaisseur située entre 0,3 mm et 2,1 mm, de préférence de 0,7 mm.

9. Matériau selon l'une quelconque des revendications précédentes, dans lequel ladite couche de support (2) présente une épaisseur située entre 0,1 mm et 0,8 mm, de préférence de 0,15 mm.

10. Procédé pour produire un matériau multicouche (100), comprenant les phases suivantes :
- la formation d'au moins une couche de microfibre de matériau polymère,
- la formation d'une couche support (2) contenant 25 à 100 % en poids de polyéthylène de poids moléculaire ultra-élevé,
- l'imprégnation de ladite au moins une couche de microfibre avec une résine de polyuréthane et la soumission de ladite au moins une couche de microfibre imprégnée à une coagulation pour obtenir une couche de microfibre coagulée (1', 1"),
- la jonction de ladite couche de microfibre coagulée (1', 1") et de ladite couche de support (2) en utilisant un adhésif en polyuréthane pour obtenir un matériau multicouche (100).

11. Procédé selon la revendication précédente, dans lequel ladite couche de microfibre coagulée (1', 1") et ladite couche de support (2) sont jointes en utilisant un adhésif en polyuréthane par laminage pour obtenir ledit matériau multicouche (100).

12. Procédé selon la revendication 10 ou la revendication 11, et comprenant en outre la formation d'une seconde couche de microfibre coagulée (1', 1") et la jonction de ladite seconde couche de microfibre coagulée (1', 1") et de ladite couche de support (2) de telle sorte que cette dernière soit intercalée entre ladite première et ladite seconde couche de microfibre coagulée (1', 1").
